# EUROPÄISCHE PATENTANMELDUNG

(11) **EP 0 960 805 A2**
(43) Veröffentlichungstag der Anmeldung: **01.12.1999**
(21) Anmeldenummer: 99110167.6
(22) Anmeldetag: 26.05.1999
(51) Int. Cl.: B62H 3/00

(54) **Einrichtung zur Lagerung von Gegenständen**

(30) Priorität: 26.05.1998 DE 19823389; 28.09.1998 DE 19844449
(71) Anmelder: Ronge, Christian, 47839 Krefeld (DE)
(72) Erfinder: Ronge, Christian, 47839 Krefeld (DE)
(74) Vertreter: Patentanwälte Hauck, Graalfs, Wehnert, Döring, Siemons

(57) **Zusammenfassung**

Es wird eine Einrichtung zur Lagerung von Gegenständen beschrieben. Die Einrichtung besitzt eine zentrale drehbar gelagerte Säule (1) und eine Vielzahl von sich von dieser sternförmig erstreckenden Schienen (7), die zur Lagerung der Gegenstände oder von die Gegenstände tragenden Bauelementen dienen. Mit Hilfe einer entlang der Säule (1) auf- und abbewegbaren Hülse (4) und hieran gelagerten Spreizelementen (6) lassen sich die Schienen (7) gleichzeitig auf- und zusammenklappen. Hierdurch wird eine in einfacher Weise aufstellbare Lagereinrichtung geschaffen.

## Beschreibung

Die vorliegende Erfindung betrifft eine Einrichtung zur Lagerung von Gegenständen mit einer zentralen drehbar gelagerten Säule und einer Vielzahl von sich von dieser sternförmig erstreckenden Schienen, die zur Lagerung der Gegenstände oder von die Gegenstände tragenden Bauelementen dienen, wobei die Schienen an der zentralen Säule klappbar gelagert sind.

Derartige Einrichtungen können beispielsweise zur Lagerung von kleineren Gegenständen, wie Büchern, Akten u. dgl., aber auch zur Lagerung von größeren Gegenständen, wie Fahrrädern, Motorrädern und sogar Automobilen Verwendung finden.

Es ist eine Vielzahl von drehbaren Schränken oder Regalen bekannt. Diese sind zum Teil so konzipiert, daß sie vom Benutzer am Aufstellungsort zu montieren sind, um den Transport dieser Schränke oder Regale möglichst einfach und platzsparend bewerkstelligen zu können. Zum Aufstellen sind hierzu allerdings mehr oder weniger komplizierte Montagevorgänge erforderlich, die zum Teil nur von Fachpersonal durchgeführt werden können.

Andere drehbare Schränke oder Regale sind bereits fertig montiert. Hierdurch entfallen zwar die vostehend geschilderten Montagearbeiten, jedoch sind aufwendigere Transportmaßnahmen erforderlich.

Aus der DE 43 07 481 A1 ist eine Einrichtung der eingangs geschilderten Art bekannt, die als drehbarer Fahrradständer zum Aufbewahren und Ausstellen in mehreren Etagen ausgebildet ist. Bei diesem Ständer erstreckt sich von einer zentralen Säule eine Vielzahl von Schienen sternförmig, auf denen die aufzubewahrenden Fahrräder angeordnet werden. Bei Nichtgebrauch sind die Schienen durch ein Drehgelenk hochklappbar.

Der vorstehend beschriebene Fahrradständer sieht daher bereits eine Möglichkeit vor, dessen Größe durch das Hochklappen der Schienen zu verringern. Allerdings muß hierbei offensichtlich jede Schiene einzeln hochgeklappt werden, was aufwendig und umständlich ist.

Der Erfindung liegt die Aufgabe zugrunde, eine Einrichtung der eingangs beschriebenen Art zu schaffen, die auf besonders einfache Weise aus einer Transport- bzw. Nichtgebrauchsstellung in eine Betriebsstellung und umgekehrt überführbar ist.

Diese Aufgabe wird erfindungsgemäß bei einer Einrichtung der angegebenen Art dadurch gelöst, daß eine an der zentralen Säule auf- und abbewegbare und sich um diese erstreckende Hülse vorgesehen ist, jede Schiene ein strebenförmiges Spreizelement aufweist, das an der Schiene und an der Hülse gelenkig gelagert ist, und die Hülse zwischen einer ersten Endstellung zum Spreizen der Spreizelemente und Aufklappen der Schienen und einer zweiten Endstellung zum Klappen der Spreizelemente und Schienen gegen die zentrale Säule bewegbar ist.

Die vorstehend beschriebene Erfindung basiert auf dem Grundgedanken, durch Bewegung eines einzigen Elementes, nämlich der an der zentralen Säule verschiebbar gelagerten Hülse, sämtliche Schienen aus einer Nichtgebrauchs- bzw. Transportstellung in eine Betriebsstellung und umgekehrt zu bewegen. Im an die zentrale Säule geklappten Zustand der Schienen (Nichtgebrauchsstellung bzw. Transportstellung) kann die Einrichtung in platzsparender Weise aufgestellt oder transportiert werden. Die Hülse befindet sich hierbei in einer zweiten Endstellung. Durch Bewegen in die erste Endstellung werden die strebenförmigen Spreizelemente mit ihren an den Schienen befestigten Enden von der Säule radial wegbewegt, wodurch die Schienen - ähnlich wie bei einem Regenschirm - in ihre Betriebsstellung, die etwa einer waagerechten Position entspricht, aufgeklappt werden. Um ein Aufklappen zu ermöglichen, sind die Schienen gelenkig an der zentralen Säule bzw. einem die Säule umgebenden Trägerelement gelagert. Das Trägerelement kann dabei fest mit der Säule verbunden sein, so daß sich die Höhenlage der Schienen nicht verstellen läßt. Eine andere Ausführungsform der Erfindung sieht vor, daß die Position des Trägerelementes an der Säule verstellbar ist, so daß die Höhenlage der Schienen eingestellt werden kann. Beispielsweise kann somit vor dem Aufklappen der Schienen durch Verfahren des Trägerelementes und der zugehörigen Hülse eine bestimmte Höhenlage für die Schienen ausgewählt werden, wonach das Trägerelement lösbar an der Säule arretiert wird. Hiernach kann durch Bewegen der Hülse auf das Trägerelement zu ein Spreizen der Spreizelemente und damit ein Aufklappen der Schienen erreicht werden.

Um die Schienen in die Nichtgebrauchsstellung zu überführen, wird die Hülse vom Trägerelement wegbewegt, so daß Spreizelemente und Schienen gegen die Säule geklappt werden. Danach kann die Arretierung des Trägerelementes gelöst werden, so daß Trägerelement, Schienen, Spreizelemente und Hülse in eine andere Höhenlage als in der aufgeklappten Stellung bewegt werden können.

Vorteilhafterweise ist die Hülse in den Endstellungen an der zentralen Säule verrastbar. Übliche Rasteinrichtungen sind dem Fachmann bekannt. Bei manueller Bedienung kann beispielsweise mit der Hülse eine federnd gelagerte Rampe überfahren werden, die nach dem Überfahren vorspringt und die Hülse arretiert. Beim Zurückbewegen der Hülse wird die Rampe beispielsweise manuell nach innen gedrückt, so daß sie von der Hülse passiert werden kann. Andere Lösungen sind ebenfalls möglich.

Wenn die Einrichtung so ausgebildet ist, daß sie eine Verschiebung der Schienen in deren Höhenlage zuläßt, sind beispielsweise entlang der zentralen Säule in Abständen mehrere Rasteinrichtungen geordnet, die sowohl für das Trägerelement für die Schienen als auch für die Hülse vorgesehen sind.

Wie bereits erwähnt, ist eine Ausführungsform der erfindungsgemäßen Einrichtung so ausgebildet, daß die Hülse manuell bewegbar ist. Diese Ausführungsform dient zur Lagerung von kleineren Gegenständen, wie beispielsweise Akten, Büchern, u. dgl. Die Einrichtung kann hierbei beispielsweise als drehbares und klappbares Regal verwendet werden. Auch eine Verwendung als Fahrradständer ist möglich.

Soll die Einrichtung zur Aufnahme von größeren Gegenständen dienen, ist die Hülse vorzugsweise motorisch bewegbar. Es ist dabei zweckmässigerweise eine Bedienungstastatur vorgesehen, mittels der das Aufklappen der Schienen und/oder das Bewegen der Schienen in eine entsprechende Höhenlage sowie die entsprechenden umgekehrten Vorgänge gesteuert werden können. In bezug auf die Ausbildung des Antriebes der Hülse ist die Erfindung keinen Beschränkungen ausgesetzt. Beispielsweise können mechanische, hydraulische oder elektrische Antriebe Verwendung finden. Bei einer Ausführungsform weist die Hülse ein motorisch angetriebenes Zahnrad auf, das mit einer an der zentralen Säule vorgesehenen Verzahnung kämmt. Das Zahnrad wird hierbei von einem Elektromotor angetrieben, der über eine Tastatur ein-und ausgesteuert wird. Die jeweiligen Endstellungen der Hülse werden durch Endschalter vorgegeben.

In Weiterbildung der Erfindung besitzt die Einrichtung mehrere Etagen von sich sternförmig erstreckenden Schienen, denen jeweils Spreizelemente und eine Hülse zugeordnet sind. Auf diese Weise lassen sich Gegenstände übereinander lagern, wobei die Schienen von benachbarten Etagen in Umfangsrichtung an der gleichen Position oder versetzt zueinander angeordnet sein können, um im letztgenannten Fall eine besonders gute Raumausnutzung zu erreichen.

Ein weiteres wahlweises Merkmal der Erfindung sieht vor, daß die zentrale Säule ein Gelenk zum Umklappen aufweist. Diese Ausführungsform lässt sich besonders platzsparend transportieren und aufstellen. Ggf. können auch mehrere Gelenke übereinander angeordnet sein, so daß sich mehrere Säulenabschnitte übereinander anordnen lassen.

Zum Aufstellen der Einrichtung besitzt die Säule vorzugsweise einen Standfuß.

Eine weitere Ausführungsform sieht vor, daß die Schienen von zwei benachbarten Etagen gegensinnig gegen die zentrale Säule klappbar sind. Hierbei können beispielsweise die Schienen einer oberen Etage nach unten und die Schienen einer unteren Etage nach oben gegen die zentrale Säule klappbar sein.

Wie bereits eingangs erwähnt, können bei der erfindungsgemäß ausgebildeten Einrichtung die Schienen selbst zur Lagerung der Gegenstände dienen. Die Schienen können aber auch zur Lagerung von die Gegenstände tragenden Bauelementen dienen. Im erstgenannten Fall sind die Schienen vorzugsweise derart profiliert, daß sie die Gegenstände direkt aufnehmen. So können sie beispielsweise im Schnitt wannenförmig ausgebildet sein, um jeweils ein Fahrrad aufzunehmen, wenn die Einrichtung als Fahrradständer ausgebildet ist. Der hier verwendete Begriff "Schiene" umfaßt daher generell sämtliche Arten von Aufnahmeelementen, die zur Lagerung von irgendwelchen Gegenständen geeignet sind.

Bei der erwähnten zweiten Ausführungsform weist die Einrichtung vorzugsweise zwischen in Vertikal- und/oder Horizontalrichtung benachbarten Schienen einsetzbare Bauelemente zur Stabilisierung und/oder Lagerung der Gegenstände auf. Durch die in Horizontalrichtung einsetzbaren Bauelemente wird eine umlaufende ebene Fläche zur Lagerung entsprechender Gegenstände gebildet. Diese Fläche kann durch entsprechende Vertikalwände unterteilt sein, die gleichzeitig zur Stabilisierung der Einrichtung dienen können. Derartige Stabilisierungselemente finden insbesondere dann Verwendung, wenn mehrere Etagen übereinander vorgesehen sind. Hierbei erstrecken sich die vertikalen Bauelemente von Schiene zu Schiene und versteifen das Gesamtgebilde. Natürlich sind alle möglichen Arten von Zwischenwänden anordbar.

Bei der vorstehend beschriebenen Ausführungsform sind die einsetzbaren Bauelemente vorzugsweise als Wand- und Boden/Deckenteile für ein Parksystem von Kraftfahrzeugen ausgebildet. Erfindungsgemäß wird somit auf diese Weise eine rasch und einfach aufstellbare und demontierbare Parkeinheit für Kraftfahrzeuge geschaffen. Nach Aufstellung des Basissystems in der vorstehend beschriebenen Weise werden die Wand- und Boden/Deckenteile für das Parksystem montiert, wobei die vorhandenen Schienen als Träger dienen. Es ergeben sich dann einzelne Parkkammern bzw. Parkbuchten in der Form von Kreisausschnitten. Damit die Kraftfahrzeuge in diese Parkbuchten gelangen können, ist vorzugsweise neben dem Parksystem ein entsprechender Aufzug angeordnet. Ein Bewegen der Kraftfahrzeuge aus dem Aufzug in die Parkbucht oder umgekehrt, kann über entsprechende Fördermittel erfolgen, die im Aufzug bzw. am Parksystem angeordnet sind. Die Einrichtung ist bei dieser Ausführungsform vorzugsweise drehbar ausgebildet, so daß der Aufzug unterschiedliche Parkkammern bedienen kann.

Bei einer weiteren Ausführungsform der Erfindung sind die einsetzbaren Bauelemente Wand- und Boden/Deckenteile für eine Wohneinheit. Auch bei dieser Ausführungsform offenbaren sich die erfindungsgemäßen Vorteile einer raschen einfachen Montage und Demontage. Nach Aufstellung des Basissystems werden auch hier die Wand- und Boden/Deckenteile eingesetzt bzw. montiert, wobei die entsprechenden Schienen als Trägerelemente hierfür dienen können. Die zentrale Säule kann dabei zur Aufnahme der entsprechenden Anschlüsse für die Wohneinheit dienen.

Die Erfindung wird nachfolgend anhand eines Ausführungsbeispiels in Verbindung mit der Zeichnung im einzelnen erläutert. Es zeigen:
- Figur 1: eine Seitenansicht einer als Präsentationsständer ausgebildeten Einrichtung; und
- Figur 2: eine Draufsicht auf die Einrichtung der Figur 1.

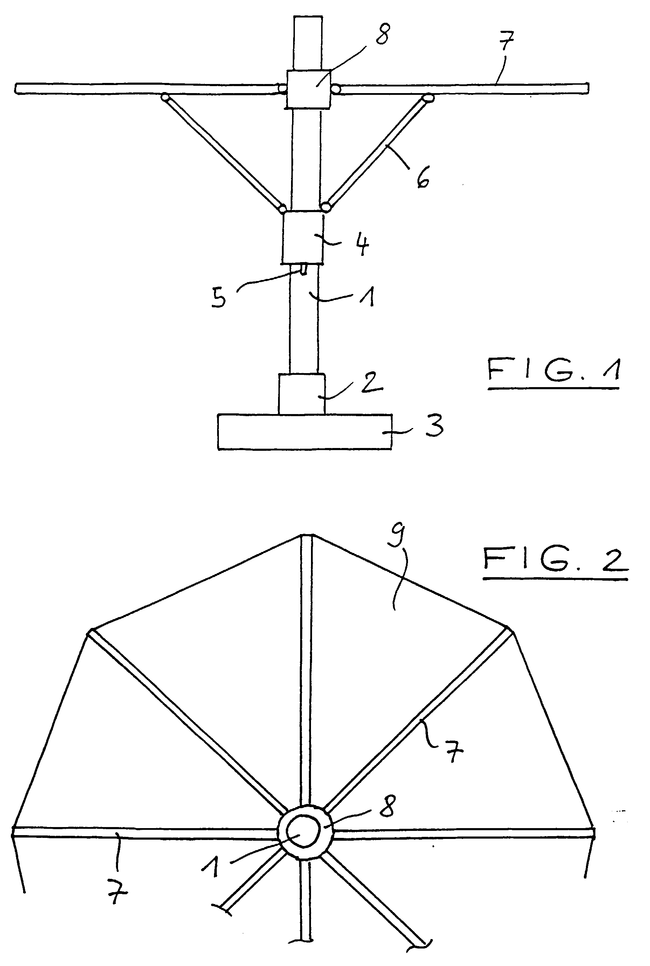

Der in Figur 1 dargestellte drehbare und klappbare Präsentationsständer besitzt eine zentrale Säule 1, bei der es sich um ein Metallrohr handeln kann. Die Säule 1 hat an ihrem unteren Ende einen Standfuß 3, der eine Aufnahmehülse 2 für die Säule 1 besitzt. In der Aufnahmehülse 2 ist die Säule 1 über Kugellager drehbar gelagert.

Am oberen Endbereich der zentralen Säule 1 befindet sich ein sich um die Säule erstreckendes hülsenförmiges Trägerelement 8, das lösbar mit der Säule verbunden ist, beispielsweise über geeignete Rasteinrichtungen (nicht gezeigt). Die Höhe dieses Trägerlementes 8 kann somit an der Säule verstellt werden. Am Aussenumfang des Trägerelementes 8 sind gelenkig und somit klappbar acht Schienen 7 gelagert, die sich vom Trägerelement 8 aus sternförmig, d.h. in Radialrichtung, erstrecken. Figur 2 zeigt die Position der einzelnen Schienen 7 im aufgeklappten Zustand, in dem diese eine horizontale Lage einnehmen.

Die Einrichtung weist ferner acht strebenförmige Spreizelemente 6 auf, die jeweils an der Unterseite einer Schiene etwa in deren radialer Mitte gelenkig gelagert sind. Das zweite Ende der Spreizelemente 6 ist gelenkig an einer Hülse 4 gelagert, die sich um die zentrale Säule 1 herum erstreckt und in Axialrichtung entlang dieser bewegbar ist. Figur 1 zeigt die Hülse 4 ihrer oberen Endstellung, die durch ein unter der Hülse angeordnetes Rastelement 5 vorgegeben ist. Das Rastelement 5 ist federnd an der Säule 1 gelagert und kann manuell gegen die Federkraft in die Säule hineingedrückt werden, so daß die Hülse 4 abwärts bewegt werden kann, was zu einem Falten der Schienen 7 und Spreizelemente 6 gegen die Säule führt.

Figur 2 zeigt eine Draufsicht auf den Präsentationsständer der Figur 1. Man erkennt, daß zwischen die aufgeklappten Schienen 7 dreieckförmige Bauelemente (Platten) 9 geschoben sind. Diese Bauelemente greifen in seitliche Vertiefungen der Schienen ein und werden in diesen geführt und gehalten. Es ergibt sich somit eine durchlaufende Präsentationsfläche.

Beim Aufstellen des Präsentationsständers wird als erstes die zentrale Säule 1 in die Hülse 2 des Standfußes 3 gesteckt. Die Hülse 4 befindet sich dabei in einer unteren nicht gezeigten Stellung, in der die Schienen 7 und Spreizelemente 6 gegen die Säule 1 geklappt sind. Die Hülse 4 wird jetzt manuell aufwärts bewegt, bis sie das Rastelement 5 überfahren hat. Dieses springt dann nach aussen vor und bildet einen entsprechenden Anschlag, der eine Rückbewegung der Hülse 4 nach unten verhindert. Durch die Aufwärtsbewegung der Hülse 4 werden die Spreizelemente 6 in die in Figur 1 gezeigte Spreizstellung bewegt, wodurch die hiermit gelenkig verbundenen Schienen 7 in die in Figur 1 gezeigte Horizontalstellung aufgeklappt werden. Danach werden die Bauelemente 9 zwischen je zwei benachbarte Schienen eingeschoben.

Die Demontage des Präsentationsständers erfolgt in umgekehrter Weise.

Ergänzend sei noch darauf hingewiesen, daß bei der Lagerung von schwereren bzw. größeren Gegenständen die Bauelemente (vertikale und horizontale Wände zwischen den Schienen) auch maschinell eingesetzt werden können, beispielsweise über geeignete hydraulische Einrichtungen, wobei auch in diesem Fall die Schienen mit geeigneten Profilierungen zur Aufnahme der Bauelemente versehen sein können.

Anstelle eines Standfusses kann die Einrichtung auch ausfahrbare bwz. ausklappbare Stützen aufweisen.

Wenn mehrere Etagen übereinander vorgesehen sind, können diese im zusammengeklappten Zustand zum Erhalt einer kompakten Einheit alle möglichst weit nach unten gefahren werden, wobei sich die heruntergeklappten Schienen von unterschiedlichen Etagen teilweise überlappen können. Beim Aufklappen der einzelnen Etagen erfolgt dann eine entsprechende Aufwärtsbewegung der jeweiligen Etage entlang der Säule.

## Patentansprüche

1. Einrichtung zur Lagerung von Gegenständen mit einer zentralen drehbar gelagerten Säule und einer Vielzahl von sich von dieser sternförmig erstreckenden Schienen, die zur Lagerung der Gegenstände oder von die Gegenstände tragenden Bauelementen dienen, wobei die Schienen an der zentralen Säule klappbar gelagert sind, dadurch gekennzeichnet, daß eine an der zentralen Säule (1) auf- und abbewegbare und sich um diese erstreckende Hülse (4) vorgesehen ist, jede Schiene (7) ein strebenförmiges Spreizelement (6) aufweist, das an der Schiene (7) und an der Hülse (4) gelenkig gelagert ist, und die Hülse (4) zwischen einer ersten Endstellung zum Spreizen der Spreizelemente (6) und Aufklappen der Schienen (7) und einer zweiten Endstellung zum Klappen der Spreizelemente (6) und Schienen (7) gegen die zentrale Säule (1) bewegbar ist.

2. Einrichtung nach Anspruch 1, dadurch gekennzeichnet, daß die Hülse (4) in den Endstellungen an der zentralen Säule (1) verrastbar ist.

3. Einrichtung nach Anspruch 1 oder 2, dadurch gekennzeichnet, daß die Hülse (1) manuell bewegbar ist.

4. Einrichtung nach Anspruch 1 oder 2, dadurch gekennzeichnet, daß die Hülse (1) motorisch bewegbar ist.

5. Einrichtung nach Anspruch 4, dadurchgekennzeichnet, daß die Hülse (4) ein motorisch angetriebenes Zahnrad aufweist, das mit einer an der zentralen Säule (1) vorgesehenen Verzahnung kämmt.

6. Einrichtung nach einem der vorangehenden Ansprüche, dadurch gekennzeichnet, daß sie mehrere Etagen von sich sternförmig erstreckenden Schienen (7) aufweist, denen jeweils Spreizelemente (6) und eine Hülse (4) zugeordnet sind.

7. Einrichtung nach einem der vorangehenden Ansprüche, dadurch gekennzeichnet, daß die zentrale Säule (1) ein Gelenk zum Umklappen aufweist.

8. Einrichtung nach einem der vorangehenden Ansprüche, dadurch gekennzeichnet, daß die zentrale Säule (1) einen Standfuß (3) besitzt.

9. Einrichtung nach einem der Ansprüche 6 bis 8, dadurch gekennzeichnet, daß die Schienen (7) von zwei benachbarten Etagen gegensinnig gegen die zentrale Säule (1) klappbar sind.

10. Einrichtung nach einem der vorangehenden Ansprüche, dadurch gekennzeichnet, daß die Schienen (7) derart profiliert sind, daß sie die Gegenstände direkt aufnehmen.

11. Einrichtung nach einem der Ansprüche 1 bis 9, dadurch gekennzeichnet, daß sie zwischen den in Vertikal- und/oder Horizontalrichtung benachbarten Schienen (7) einsetzbare Bauelemente (9) zur Stabilisierung und/oder Lagerung der Gegenstände aufweist.

12. Einrichtung nach einem der vorangehenden Ansprüche, dadurch gekennzeichnet, daß die Schienen (7) über ein Trägerelement (8) an der zentralen Säule (1) gelagert sind, dessen Position an der Säule (1) in der Höhe verstellbar ist.

13. Einrichtung nach Anspruch 11, dadurch gekennzeichnet, daß die einsetzbaren Bauelemente Wand- und Boden/Deckenteile für ein Parksystem von Kraftfahrzeugen sind.

14. Einrichtung nach Anspruch 11, dadurch gekennzeichnet, daß die einsetzbaren Bauelemente Wand- und Boden/Deckenteile für eine Wohneinheit sind.
